(19) Europäisches Patentamt
European Patent Office
Office européen des brevets

(11) Publication number: **0 069 305**
**B1**

(12) **EUROPEAN PATENT SPECIFICATION**

(45) Date of publication of patent specification: **11.09.85**

(51) Int. Cl.$^4$: **B 01 D 13/04**

(21) Application number: **82105635.5**

(22) Date of filing: **25.06.82**

# (54) Reverse osmosis membrane quenching.

(30) Priority: **25.06.81 US 278432**

(43) Date of publication of application:
**12.01.83 Bulletin 83/02**

(45) Publication of the grant of the patent:
**11.09.85 Bulletin 85/37**

(84) Designated Contracting States:
**BE DE FR GB IT NL**

(56) References cited:
**DE-A-2 918 027**
**US-A-3 554 379**
**US-A-3 737 042**
**US-A-3 876 738**
**US-A-4 080 744**

**DIE ANGEWANDTE MAKROMOLEKULARE CHEMIE, vol. 73, no. 1090, 1978, P. ZSCHOCKE et al. "Asymmetrische Umkehrosmose-*Membranen aus den Reihen der aromatischen* Polyamide und Polyamidhydrazide, pages 1 to 23**

(73) Proprietor: **E.I. DU PONT DE NEMOURS AND COMPANY**
**1007 Market Street**
**Wilmington Delaware 19898 (US)**

(72) Inventor: **Sundet, Sherman Archie**
**2404 Allendale Road**
**Wilmington Delaware 19803 (US)**

(74) Representative: **Abitz, Walter, Dr.-Ing. et al**
**Abitz, Morf, Gritschneder, Freiherr von Wittgenstein Postfach 86 01 09**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 069 305 B1

Courier Press, Leamington Spa, England.

**Description**

Background of the invention

Asymmetric membranes have long been used in a variety of purification operations. Permeation selective or permselective membranes preferentially pass certain components of liquid mixtures while retaining other components. In reverse osmosis membranes, a hydrostatic pressure in excess of the equilibrium osmostic pressure of the liquid mixture oı solution is applied to the liquid to force the more permeable components, usually water, through the membrane in preference to the less permeable components, such as a salt, contrary to the normal osmotic flow.

In the preparation of membranes for these applications, a film or hollow fiber is first cast from a casting dope. This film is then extracted by treating with a nonsolvent to replace the original casting solvent. Continuous effort has been directed toward the improvement of this process to increase the flux and salt rejection of the final membrane.

Summary of the invention

The instant invention provides an improvement in the process for preparing reverse osmosis membranes which improves the membrane characteristics during subsequent processing.

Specifically, the instant invention provides, in the process for preparing permselective membranes by extracting a hollow fiber or flat sheet membrane composed of polymer, organic solvent and optionally dissolved salt and water with a nonsolvent for the polymer to extract the solvent and the salt, the improvement wherein the hollow fiber or flat sheet membrane is contacted, before extraction, with an aqueous quenching liquid comprising about from 5 to 20 weight percent for hollow fiber membrane and from about 20 to 50 weight percent for flat sheet membrane of at least one polar liquid selected from the group consisting of carbonyl compounds of the general formula

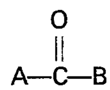

wherein A is H, $NH_2$, or $CH_3$ and B is OH or $NH_2$.

Detailed description of the invention

The instant invention is applicable to those polymeric reverse osmosis membranes previously used in the art. The typical preparation of these polymers involves first casting a "proto-membrane" consisting of polymer, organic polar solvent, and, in general, dissolved salt and water. The proto-membrane is then typically extracted by contacting it with water which frequently serves as the storage medium for the finished membrane. Such polymers and their preparation are described in detail in Richter, et al, U.S. Patent 3,567,632.

In US—A—3876738 polymeric membranes, e.g. of Nylon, are cast and quenched with an aqueous liquid, such as methanol, before extraction is effected.

Carbonyl compounds which can be used in the instant invention include formic acid, acetic acid, formamide and urea. Of these, formic acid, formamide, and urea are preferred, and formic acid provides a particularly outstanding combination of performance characteristics, ease of handling and ready availability.

The concentration is about from 20 to 50 weight percent for flat membranes and about from 5 to 20 weight percent for hollow fibers. Less than 5% does not generally provide a significant benefit to the overall process, while concentrations in excess of 50% result in depreciation of the performance characteristics of the final permselective membrane. Because of the water solubility of each of the presently required polar compounds, they can be combined with the aqueous quench solution by simple mixing.

The instant process is applicable to a wide range of temperatures extending from the freezing point of the liquid up to the drying temperature used for the membrane. Preferably, a temperature from about 10 to 30°C is used.

The process of the instant invention results in membranes having particularly high flux and improved resistance to long-term exposure to elevated temperatures. These benefits are due in part to the quenching step of the instant process, which sets or stabilizes the membrane prior to final extraction.

The invention is further illustrated by the following specific examples, in which parts and percentages are by weight unless otherwise indicated.

Example 1 and Comparative Examples A—B

For Example 1 and Comparative Examples A and B, an aromatic copolyamide was prepared from m-phenylene diamine and m-phenylene diamine-4-sulfonic acid (8/2 mole ratio) with isophthaloyl and terephthaloyl chlorides (7/3 mole ratio) with an inherent viscosity at 35°C of 0.75 dl/g (0.5% in DMF). 20 parts of the polyaramide and 11 parts of $MgCl_2 \cdot 6H_2O$ were dissolved in 80 parts of dimethyl formamide and the resulting solution filtered through a filter of 5 micrometres porosity.

From this solution, membranes were cast on a glass plate at 95°C, and dried for 120 seconds. The membranes were cooled in air for 90 seconds and then quenched for 15 minutes in formic acid or water as indicated below. The membranes were extracted in water at room temperature for 45 minutes, followed by annealing in water at 60°C for 30 minutes. The membranes were stored in water until tested.

The membranes were tested for reverse osmosis performance in stirred monel cells using salt solutions at concentrations of 1.5 to 3.2 g/l at pressures up to 55.2 bar (800 psi). Fractional rejection of salt and the flux constant of the water, reported in m/s · TPa, were calculated from the conductivity of the permeate water and its rate of flow through the membrane. The results are summarized in the following Table I.

TABLE I

| Example | Quench medium | As prepared Rejection | As prepared Flux constant | After 140 hrs. in $H_2O$ Rejection | After 140 hrs. in $H_2O$ Flux constant |
|---|---|---|---|---|---|
| A | Water at 4°C for 15 mins. | 0.986 | 1.32 | 0.958 | 1.00 |
| B | 85% Formic acid at 5°C for 15 mins. | 0.955 | 0.75 | 0.938 | 0.65 |
| 1 | 50% Formic acid at 5°C for 15 mins. | 0.979 | 1.63 | 0.959 | 1.47 |

The membrane quenched in 50% formic acid before extraction not only exhibits higher flux levels as prepared but sharply better performance on aging.

Examples 2—4 and Comparative Examples C—D

A series of membranes was prepared and tested substantially as in Example 1 except that the concentration of formic acid was varied. The results are summarized in the following Table II.

TABLE II

| Example | Quench medium (5°C) | As prepared Rejection | As prepared Flux constant | After 132 hrs. at 55°C Rejection | After 132 hrs. at 55°C Flux constant |
|---|---|---|---|---|---|
| C | Water | 0.981 | 1.334 | 0.922 | 1.067 |
| D | 65% Formic acid | 0.979 | 1.185 | | |
| 2 | 50% Formic acid | 0.982 | 1.945 | 0.954 | 1.544 |
| 3 | 40% Formic acid | 0.976 | 2.022 | 0.952 | 1.620 |
| 4 | 25% Formic acid | 0.984 | 2.174 | 0.956 | 1.549 |

Membranes prepared according to the present invention exhibit superior flux both as prepared and after aging.

Examples 5 and 6

The general procedure of Example 1 was repeated, except that the membranes were quenched in 35% formic acid for a very short period. The results are summarized in the following Table III.

TABLE III

| Example | Quench period | As prepared Rejection | As prepared Flux constant | After 132 hrs. at 55°C Rejection | After 132 hrs. at 55°C Flux constant |
|---|---|---|---|---|---|
| 5 | 1 sec | 0.972 | 2.045 | 0.948 | 1.897 |
| 6 | 4 secs | 0.966 | 2.182 | 0.949 | 2.018 |

Comparative Examples $E_1$, $E_2$, F and G and Examples 7—9

A series of hollow fiber samples were spun by standard dry spinning techniques followed by immediate in line quenching with water or formic acid solutions. The spinning rate was 20 m/min through a 1 meter long drying cell kept at 175—180°C. The solution temperature at the spinneret was 125±1°C. The

solution was pumped through a one hole spinneret at the rate of 10 cc/hour. The solution viscosity was 81 $Ns/m^2$ (810 poises) at 120°C. The fibers were assembled into test permeators and evaluated. The results are summarized in the following Table IV, together with the outer and inner diameters of the fibers in microns.

TABLE IV

| Example | % Formic acid in quench bath | Outer diameter | Inner diameter | Rejection | Flux constant |
|---|---|---|---|---|---|
| $E_1$ | 0 | 101 | 30 | 0.896 | 0.32 |
| $E_2$ | 4.2 | 104 | 38 | 0.955 | 0.60 |
| 7 | 10.4 | 100 | 35 | 0.942 | 0.68 |
| 8 | 14.5 | 113 | 35 | 0.895 | 0.58 |
| 9 | 20.4 | 113 | 39 | 0.930 | 0.43 |
| F | 28.6 | 114 | 33 | 0.850 | 0.25 |
| G | 40.0 | 117 | 31 | 0.380 | 0.14 |

Examples 10—21 and Comparative Example H

A copolyaramide was prepared from m-phenylene diamine and isophthalic and terephthalic acids in the ratio of 70/30, with one-fifth of the diamine residues sulfonated in the 4-position to give a copolyaramide with 2.5 weight % sulfur. Its inherent viscosity, as determined at 35°C at 0.5 g/100 ml of dimethyl formamide was 0.75—0.8 dl/g.

The copolyaramide was dissolved (18 parts by weight) with 10.3 parts of $MgCl_2 \cdot 6H_2O$ in 17.7 parts of dimethyl formamide and the resulting solution then filtered through a 5 micrometre filter.

Membranes were cast on a glass plate at 95°C with a Gardner knife at varying thickness, dried under a stream of nitrogen, and quenched in an aqueous medium before extracting overnight in distilled water.

In Comparative Example H, the quench medium was water at 8°C. After annealing in water for four hours at the temperatures indicated in Table V, the permeability properties of the membranes were determined in stirred cells, with a feed solution containing 3.5 grams per liter of sodium chloride. The data shown were obtained at 22—3°C and 55.2 bar (800 psi) pressure, and are expressed as R/Kw, where the rejection, R, is the fraction of the salt that is turned back by the membrane, and Kw, in meters per second per TeraPascal, is the hydraulic permeability constant.

TABLE V

| Example | Cast mils | Dry mins | Quench additive | % | Annealed at 55°C | 65°C | 75°C |
|---|---|---|---|---|---|---|---|
| H | 15 | 2 | — | — | | .983/1.48 | |
| 10 | " | 2.5 | Formic Acid | 35 | .983/3.82 | .983/2.85 | |
| 11 | 11 | 2 | " " | 25 | | .984/2.53 | |
| 12 | " | " | " " | 45 | | .988/2.12 | |
| 13 | " | 2.5 | " " | 35 | | | .985/2.06 |
| | | | | | 60°C | | 70°C |
| 14 | 11 | 2 | Formic acid | 35 | .978/2.21 | | .973/1.90 |
| 15 | " | " | Acetic acid | 45 | .976/2.28 | | .961/1.61 |
| 16 | 15 | " | Formamide | 20 | | .993/2.61 | |
| 17 | " | " | Acetamide | " | | .995/2.29 | |
| 18 | " | 2.5 | Formamide | 35 | .980/4.21 | .985/3.37 | |
| 19 | " | 2 | Urea | 30 | | .992/2.64 | |
| 20 | " | " | " | 40 | | .970/2.91 | |
| 21 | " | " | " | 50 | | .986/2.52 | |

## Claims

1. In the process for preparing permselective membranes by extracting a hollow fiber or flat sheet membrane composed of polymer, organic solvent and optionally dissolved salt and water with a nonsolvent for the polymer to extract the solvent and the salt, the improvement wherein the hollow fiber or flat sheet membrane is contacted, before extraction, with an aqueous quenching liquid comprising about from 5 to 20 weight percent for hollow fiber membrane and from about 20 to 50 weight percent for flat sheet membrane of at least one polar liquid selected from the group consisting of carbonyl compounds of the general formula

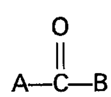

wherein A is H, $NH_2$, or $CH_3$ and B is OH or $NH_2$.

2. A process of Claim 1 wherein the polar liquid consists essentially of formic acid.

3. A process of Claim 1 wherein the polar liquid consists essentially of formamide.

4. A process of Claim 1 wherein the aqueous quench solution is maintained at a temperature of about from 10 to 30°C.

## Patentansprüche

1. Beim Verfahren zur Herstellung permselektiver Membrane durch Extraktion einer Hohlfaser- oder Flachmembran aus polymerem, organischem Lösungsmittel und gegebenenfalls gelöstem Salz und Wasser mit einem Nichtlöser für das Polymere, um das Lösungsmittel und das Salz zu extrahieren, die Verbesserung, bei der die Hohlfaser- oder Flachmembran vor der Extraktion mit einer wässrigen Abschreckflüssigkeit in Kontakt gebracht wird, die etwa 5 bis 20 Gew.% für Hohlfaser-membrane und etwa 20 bis 50 Gew.% für Flachmembrane mindestens einer polaren Flüssigkeit enthält, die aus der Gruppe von Carbonylverbindungen der allgemeinen Formel

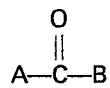

ausgewählt wird, worin A H, $NH_2$ oder $CH_3$ und B OH oder $NH_2$ ist.

2. Verfahren nach Anspruch 1, bei dem die polare Flüssigkeit im wesentlichen aus Ameisensäure besteht.

3. Verfahren nach Anspruch 1, bei dem die polare Flüssigkeit im wesentlichen aus Formamid besteht.

4. Verfahren nach Anspruch 1, bei dem die wässrige Abschrecklösung auf einer Temperatur von etwa 10 bis 30°C gehalten wird.

**Revendications**

1. Dans le procédé de préparation de membranes permsélectives en traitant par extraction une membrane du type fibre creuse ou du type feuille plane composée de polymère, de solvant organique et, éventuellement, de sel dissous et d'eau au moyen d'un non-solvant pour le polymère afin d'extraire le solvant et le sel, le perfectionnement selon lequel la membrane du type fibre creuse ou du type feuille plane est mise en contact, avant l'extraction, avec un liquide aqueux de trempe comprenant environ 5 à 20% en poids pour une membrane du type fibre creuse et environ 20 à 50% en poids pour une membrane du type feuille plane d'au moins un liquide choisi dans le groupe constitué par les composés carbonylés de la formule générale:

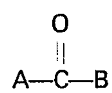

où A est H, $NH_2$ ou $CH_3$ et B est OH ou $NH_2$.

2. Un procédé selon la revendication 1, dans lequel le liquide polaire est constitué essentiellement d'acide formique.

3. Un procédé selon la revendication 1, dans lequel le liquide polaire est constitué essentiellement de formamide.

4. Un procédé selon la revendication 1, dans lequel la solution aqueuse de trempe est maintenue à une température de 10 à 30°C.